# EUROPEAN PATENT SPECIFICATION

(11) **EP 3 955 762 B1**
(45) Date of publication and mention of the grant of the patent: **07.06.2023**
(21) Application number: 20725902.9
(22) Date of filing: 09.04.2020
(51) Int. Cl.: A41G 3/00, A61L 27/18, B32B 27/00

(54) **MULTILAYER BASE THAT CAN BE GLUED TO THE SKIN TO FORM SELF-ADHESIVE PROSTHESES FOR HAIR AND PROSTHETIC IMPLANTS THUS OBTAINED**
AUF DIE HAUT KLEBBARE MEHRSCHICHTIGE BASIS ZUR HERSTELLUNG VON SELBSTHAFTENDEN HAARPROTHESEN UND SO ERHALTENE PROTHETISCHE IMPLANTATE
BASE MULTICOUCHE POUVANT ÊTRE COLLÉE SUR LA PEAU POUR FORMER DES PROTHÈSES AUTO-ADHÉSIVES POUR CHEVEUX ET IMPLANTS PROTHÉTIQUES AINSI OBTENUS

(30) Priority: 18.04.2019 IT 201900006060
(43) Date of publication of application: 23.02.2022
(73) Proprietor: Sicurmatica Di Massimiliano Delli, Province of Firenze (IT)
(72) Inventor: DELLI, Massimiliano, 50041 CALENZANO (IT)
(74) Representative: Mola, Edoardo
(86) International application number: PCT/IB2020/053401
(87) International publication number: WO 2020/212810

(56) References cited:
- EP-A1- 1 810 582
- WO-A1-2010/063699
- JP-A- 2005 336 680
- KR-A- 20100 062 731

## Description

The present invention relates to a multilayer base that can be glued to the skin to produce self-adhesive prostheses for hair, of the type described, for example, in Italian patent no. 102008901683189 (formerly, no. GE2008A000100), filed on December 2nd 2008 in the name of the same applicant of the present application with the title "Metodo di fabbricazione di un supporto multistrato incollabile sulla cute per la formazione di protesi autoadesive per capelli ed impianti protesici così ottenuti" (Method for making a multilayer base that can be glued to the skin to form self-adhesive prostheses for hair and prosthetic implants thus obtained), also known as WO2010/063699, which discloses the preamble of claim 1.

As described in the above-mentioned prior patent, this method comprises:
a) forming a thin membrane consisting of a thermoformable acrylic compound designed to produce crowns having the shape of the user's cranium;
b) producing the actual prosthesis obtained by means of grafting hair onto a polyurethane membrane that is subsequently attached to the adhesive acrylic membrane.

The defect of this known method consisted in the fact that the hair, grafted onto the polyurethane membrane, rapidly lost its shine and elasticity.

According to the present invention it has been discovered that, by adding a mixture composed of 0.1% to 3% by weight of micronized powder of the hair on a membrane of nano-bio-ceramics and of 0.1% to 3% of maslinic acid to the polyurethane mixture forming the membrane onto which the hair is grafted, the polymer-keratin-water bond is modified providing continuous hydration to the hair shaft, which in this way maintains its elasticity and shine for a long period of time.

The polyurethane membrane thus modified is therefore able to alter the moisture absorption-desorption process in the hair grafted onto it.

A composition of the polyurethane membrane that conforms with the present invention could consist of the following (expressed in weight percentages):
- micronized silver powder 1% by weight;
- nano-bio-ceramics 1% by weight;
- maslinic acid 1% by weight;
- polyurethane glue added up to 100% parts by weight.

Both the formation of the acrylic base film and the formation of the polyurethane membrane onto which the hair is grafted can be implemented using well-known industrial methods, such as grafting of the hair onto the polyurethane membrane can be implemented using industrial methods.

## Claims

1. A multilayer base designed to be bonded to the skin so as to form a prosthesis for self-adhesive hair, comprising:
• an acrylic film with the addition of 0.1 to 3% of silver ions having the shape of the crown of the user's cranium;
• a polyurethane membrane onto which the hair is grafted attached to said acrylic film, **characterized in that** 0.1 to 3% by weight of micronized silver powder, 0.1 to 3% of nano-bio-ceramics and 0.1 to 3% of maslinic acid are added to the polyurethane polymer forming the membrane onto which the hair is grafted.

## Patentansprüche

1. Eine auf die Haut klebbare mehrschichtige Basis zur Herstellung einer selbsthaftenden Haarprothese, welche jeweils Folgendes umfasst:
- einen Acrylfilm bei Zusatz von 0,1 bis 3% Silberionen in der Form der Schädeldecke des Anwenders;
- eine Polyurethanmembran, auf die das Haar transplantiert wird und die an dem genannten Acrylfilm befestigt ist, **dadurch gekennzeichnet, dass** 0,1 bis 3% an Gewicht an mikronisiertem Silberpulver, 0,1 bis 3% an Nano-Bio-Keramik und 0,1 bis 3% an Maslinsäure zum Polyurethanpolymer hinzugefügt werden, wodurch die Membran gebildet wird, auf die das Haar transplantiert wird.

## Revendications

1. Base multicouche pouvant être collée sur la peau pour former une prothèse de cheveux auto-adhésive, comprenant :
- un film acrylique additionné de 0,1 à 3 % d'ions d'argent ayant la forme de la couronne du crâne de l'utilisateur ;
- une membrane en polyuréthane sur laquelle sont greffés les cheveux attachés audit film acrylique, **caractérisée en ce que** de 0,1 à 3 % en poids de poudre d'argent micronisée, de 0,1 à 3 % de nano-bio-céramique et de 0,1 à 3 % d'acide maslinique sont ajoutés au polymère de polyuréthane formant la membrane sur laquelle sont greffés les cheveux.
